# EUROPEAN PATENT APPLICATION

(11) **EP 4 040 632 A1**
(43) Date of publication of application: **10.08.2022**
(21) Application number: 20882854.1
(22) Date of filing: 10.06.2020
(51) Int. Cl.: H02J 13/00

(54) **HIGH VOLTAGE SWITCH CONTROL SYSTEM AND METHOD FOR WIND TURBINE**

(30) Priority: 28.10.2019 CN 201911032284
(71) Applicant: Beijing Goldwind Science & Creation Windpower Equipment Co. Ltd., Beijing 100176 (CN)
(72) Inventor: DENG, Gang, Beijing 100176 (CN); SHI, Chao, Beijing 100176 (CN)
(74) Representative: Gulde & Partner
(86) International application number: PCT/CN2020/095384
(87) International publication number: WO 2021/082459

(57) **Abstract**

The present disclosure provides a system and a method for controlling a high-voltage switch of a wind turbine, which relate to the field of wind power generation. One end of the high-voltage switch is connected to a transformer of the wind turbine and the other end is connected to a high-voltage bus, and the system includes: an activating apparatus for an uninterruptible power supply configured to transmit, under the condition that the high-voltage bus is live, an activation instruction to the uninterruptible power supply of the wind turbine; the uninterruptible power supply configured to supply power to a controlling apparatus for the high-voltage switch in response to the activation instruction; the controlling apparatus configured to control, in response to a remote closing instruction for the wind turbine, the high-voltage switch to be closed. With the technical solutions according to the present disclosure, remote closing of the high-voltage switch can be achieved, improving the timeliness of the closing.

## Description

### CROSS-REFERENCE TO RELATED APPLICATIONS

This application claims the priority of Chinese patent application No. 201911032284.1 entitled "SYSTEM AND METHOD FOR REMOTELY CONTROLLING HIGH-VOLTAGE SWITCH OF WIND TURBINE" filed on October 28, 2019, the entire content of which is incorporated herein in its entirety by reference.

### TECHNICAL FIELD

The present disclosure generally relates to the field of wind power generation, and in particular, to a system and a method for controlling a high-voltage switch of a wind turbine.

### BACKGROUND

Due to the requirements of wind resources for wind power generation, wind turbines are often located in remote places with poor environment and inconvenient arrival. For example, a wind turbine may be located offshore.

A high-voltage switch cabinet of the wind turbine may be arranged in a tower or in a nacelle. When the high-voltage switch cabinet is powered off, the wind turbine will also be powered off, so in the case where the high-voltage switch cabinet is powered off, if a high-voltage switch in the high-voltage switch cabinet needs to be re-closed, a worker is required to come to the location of the wind turbine to manually close the high-voltage switch. However, since the wind turbine is provided in the place inconvenient for the worker to reach, the manual closing increases the consumption of manpower and transportation resources, and the high-voltage switch cannot be timely closed/opened.

### SUMMARY

Embodiments of the present disclosure provide a system and a method for controlling a high-voltage switch of a wind turbine, which can achieve remote closing of the high-voltage switch and improve the timeliness of the closing.

In a first aspect, the embodiments of the present disclosure provide a system for controlling a high-voltage switch of a wind turbine, where one end of the high-voltage switch is connected to a transformer of the wind turbine and the other end is connected to a high-voltage bus, and the system includes:
an activating apparatus for an uninterruptible power supply configured to transmit, under the condition that the high-voltage bus is live, an activation instruction to the uninterruptible power supply of the wind turbine;
the uninterruptible power supply configured to supply power to a controlling apparatus for the high-voltage switch in response to the activation instruction;
the controlling apparatus configured to control, in response to a remote closing instruction for the wind turbine, the high-voltage switch to be closed.

In a second aspect, the embodiments of the present disclosure provide a method for controlling the high-voltage switch of the wind turbine applied to the system of the first aspect, including:
transmitting, by the activating apparatus under the condition that the high-voltage bus is live, the activation instruction to the uninterruptible power supply of the wind turbine;
supplying, by the uninterruptible power supply, power to the controlling apparatus for the high-voltage switch in response to the activation instruction;
controlling, by the controlling apparatus, the high-voltage switch in a high-voltage switch cabinet configured to connect the high-voltage bus to be closed in response to the remote closing instruction of the wind turbine.

With the system and the method provided by the embodiments of the present disclosure, under the condition that the activating apparatus determines that the high-voltage bus connected to the high-voltage switch is live, the activation instruction is transmitted to the uninterruptible power supply. The uninterruptible power supply supplies power to the controlling apparatus in response to the activation instruction, so that the controlling apparatus can control the high-voltage switch to be closed after receiving the remote closing instruction for the wind turbine. Even if the wind turbine is provided in a place inconvenient for a worker to reach, remote closing can be achieved by using the system and the method provided by the embodiments of the present disclosure, without requiring the worker to come to a machine location of the wind turbine for manually closing the high-voltage switch, thereby improving the timeliness of the closing.

### BRIEF DESCRIPTION OF THE DRAWINGS

The present disclosure will be better understood from the following detailed description of non-limiting embodiments of the present disclosure with reference to the drawings in which like or similar reference numerals indicate like or similar features.
Fig. 1 is a schematic structural diagram of a system for controlling a high-voltage switch of a wind turbine according to an embodiment of the present disclosure.
Fig. 2 is a schematic structural diagram of a system for controlling a high-voltage switch of a wind turbine according to another embodiment of the present disclosure.
Fig. 3 is a schematic structural diagram of a system for controlling a high-voltage switch of a wind turbine according to yet another embodiment of the present disclosure.
Fig. 4 is a flowchart of a method for controlling a high-voltage switch of a wind turbine according to an embodiment of the present disclosure.
Fig. 5 is a flowchart of a method for controlling a high-voltage switch of a wind turbine according to another embodiment of the present disclosure.
Fig. 6 is a flowchart of a method for controlling a high-voltage switch of a wind turbine according to yet another embodiment of the present disclosure.
Fig. 7 is a flowchart of a method for controlling a high-voltage switch of a wind turbine according to yet another embodiment of the present disclosure.

### DETAILED DESCRIPTION

Features and exemplary embodiments of various aspects of the present disclosure will be described in detail below. In the following detailed description, many specific details are proposed in order to provide a comprehensive understanding of the present disclosure. However, it will be apparent to those skilled in the art that the present disclosure may be practiced without some of these specific details. The following description of the embodiments is merely provided to provide a better understanding of the disclosure by illustrating examples of the disclosure and are not intended to limit the scope of the application. In the drawings and the following description, well-known structures and techniques have not been shown in order to avoid unnecessarily obscuring the present disclosure.

The embodiments of the present disclosure provide a system and a method for controlling a high-voltage switch of a wind turbine, which can be applied to a scenario where the high-voltage switch in a high-voltage switch cabinet of the wind turbine is remotely closed or opened. The high-voltage switch is arranged in the high-voltage switch cabinet. A transformer of the wind turbine is connected to a high-voltage bus via the high-voltage switch. That is, one end of the high-voltage switch is connected to the transformer of the wind turbine, and the other end of the high-voltage switch is connected to the high-voltage bus. The circuit between the transformer and the high-voltage bus of the wind turbine is turned on when the high-voltage switch is closed. The circuit between the transformer of the wind turbine and the high-voltage bus is turned off when the high-voltage switch is opened. The high-voltage switch may particularly be a circuit breaker and is not limited thereto.

In the embodiments of the present disclosure, a controlling apparatus for the high-voltage switch in the high-voltage switch cabinet of the wind turbine may be powered by the wind turbine's own uninterruptible power supply (UPS), so that the controlling apparatus can close the high-voltage switch in time in response to a remote closing instruction for the wind turbine.

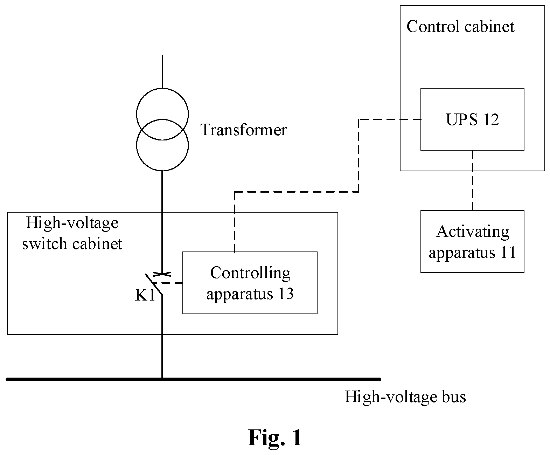

Fig. 1 is a schematic structural diagram of a system for controlling a high-voltage switch of a wind turbine according to an embodiment of the present disclosure. As shown in Fig. 1, the system may include an activating apparatus 11 for an uninterruptible power supply 12, the uninterruptible power supply 12, and a controlling apparatus 13 for the high-voltage switch. The dashed lines connecting the various parts as shown in Fig. 1 indicate communication or electrical connections.

The activating apparatus 11 is configured to transmit, under the condition that the high-voltage bus is live, an activation instruction to the uninterruptible power supply 12 of the wind turbine.

In some cases, such as in the event of a grid-side failure, the high-voltage switch K1 in the high-voltage switch cabinet is typically opened in order to ensure the safety of the wind turbine. If the grid-side failure is eliminated, the high-voltage bus is restored to be live, the condition for the wind turbine to start is re-satisfied, and the high-voltage switch K1 in the high-voltage switch cabinet needs to be closed. The activating apparatus 11 may be used to monitor whether the high-voltage bus is live.

The activating apparatus 11 may be arranged in the main circuit of the high-voltage switch cabinet and activate the uninterruptible power supply 12 when the high-voltage bus is determined to be live. The activating apparatus 11 may be at least partially arranged in a remote control room, such as a central control room for the wind turbine, remotely monitor whether the high-voltage bus is live, and activate the uninterruptible power supply 12 when the high-voltage bus is live. The specific settings of the activating apparatus 11 are not limited herein.

The uninterruptible power supply 12 is configured to supply power to the controlling apparatus 13 for the high-voltage switch in response to the activation instruction.

For example, the uninterruptible power supply 12 may be a battery and is not limited thereto. The uninterruptible power supply 12 provided by this embodiment of the disclosure may be the wind turbine's own uninterruptible power supply. In some examples, the uninterruptible power supply 12 may be arranged in a control circuit of the high-voltage switch cabinet. For example, the uninterruptible power supply may be arranged in a control cabinet of the wind turbine. Under the condition that the wind turbine is stopped, the wind turbine's own uninterruptible power supply may supply power to some electric components of the wind turbine. In this embodiment of the present disclosure, the controlling apparatus 13 is powered by the wind turbine's own uninterruptible power supply 12. The remote control of the high-voltage switch cabinet can be realized by using the components provided with the wind turbine without additional components which avoids additional costs.

In some embodiments, an additional uninterruptible power supply may also be provided while the wind turbine has its own uninterruptible power supply. The controlling apparatus 13 may be powered by the additional uninterruptible power supply and/or the wind turbine's own uninterruptible power supply.

The controlling apparatus 13 is configured to control, in response to a remote closing instruction for the wind turbine, the high-voltage switch K1 to be closed.

In some examples, the controlling apparatus 13 may be arranged in the main circuit of the high-voltage switch cabinet. For example, the controlling apparatus 13 may be arranged in the high-voltage switch cabinet. Under the condition that the uninterruptible power supply 12 supplies power to the controlling apparatus 13, if the remote closing instruction for the wind turbine is received by the controlling apparatus 13, the controlling apparatus 13 may control the high-voltage switch K1 to be closed according to the remote closing instruction to achieve the closing operation. The remote closing instruction may be transmitted to the controlling apparatus 13 via a communication link.

In this embodiment of the present disclosure, the activating apparatus 11 in the system transmits the activation instruction to the uninterruptible power supply 12 when the high-voltage bus is determined to be live. The uninterruptible power supply 12 supplies power to the controlling apparatus 13 in response to the activation instruction, so that the controlling apparatus 13 can control the high-voltage switch K1 to be closed after receiving the remote closing instruction for the wind turbine. Even if the wind turbine is arranged in a place inconvenient for a worker to reach, the remote closing can be realized by using this embodiment of the present disclosure, without requiring the worker to come to the location of the wind turbine for manually closing the high-voltage switch K1, which improves the timeliness of the closing, avoids the additional consumption of manpower and transportation and reduces costs.

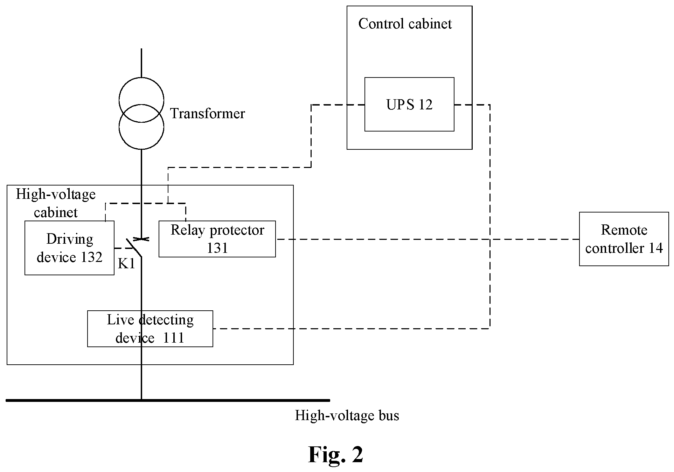

Fig. 2 is a schematic structural diagram of a system for controlling a high-voltage switch of a wind turbine according to another embodiment of the present disclosure. Fig. 2 differs from Fig. 1 in that the activating apparatus 11 may include a live detecting device 111 as shown in Fig. 2. The dashed lines connecting the various parts as shown in Fig. 2 indicate communication or electrical connections.

The live detecting device 111 may be arranged in the high-voltage switch cabinet and configured to detect whether the high-voltage bus is live. If the high-voltage bus is detected to be live, the live detecting device 111 transmits an activation instruction to the uninterruptible power supply 12. The live detecting apparatus 11 may further transmit prompt information if the high-voltage bus is detected to be live. The prompt information may be sound information, light information, image information, or the like, which is not limited herein.

For example, the live detecting device 111 may include a live display. The live display may be the wind turbine's own live display.

The system shown in Fig. 2 may further include a remote controller 14 of the wind turbine in communication with the controlling apparatus 13. The remote controller 14 is configured to issue a remote closing instruction, so that the controlling apparatus 13 controls the high-voltage switch Kl to be closed according to the remote closing instruction under the condition that the uninterruptible power supply 12 is activated.

The remote controller 14 may be specifically arranged in a central control room corresponding to the wind turbine. After the uninterruptible power supply 12 is activated, it supplies power to the controlling apparatus 13. The remote controller 14 issues the remote closing instruction to the controlling apparatus 13 under the condition that the uninterruptible power supply 12 is activated.

In addition to the remote closing instruction, the remote controller 14 may be configured to issue a remote opening instruction to the controlling apparatus 13, so that the controlling apparatus 13 controls the high-voltage switch K1 to be opened according to the remote opening instruction. The remote opening instruction does not need to be issued under the condition that the uninterruptible power supply 12 supplies power to the controlling apparatus 13.

In the embodiment shown in Fig. 2, as long as the controlling apparatus 13 is separately networked with the remote controller 14 in the central control room for the wind turbine, the remote controller 14 can transmit a remote opening signal or a remote closing signal to the controlling apparatus 13.

In some examples, the controlling apparatus 13 may include a relay protector 131 and a driving device 132 for the high-voltage switch (see Fig. 2 for details). The relay protector 131 is configured to transmit a closing control instruction to the driving device 132 in response to the remote closing instruction under the condition that the uninterruptible power supply 12 supplies power to the relay protector 131. The driving device 132 is configured to control the high-voltage switch K1 to be closed in response to the closing control instruction under the condition that it is powered by the uninterruptible power supply 12. In some examples, the driving device 132 may be an electric motor.

In another example, the relay protector 131 may further be configured to transmit an opening control instruction to the driving device 132 in response to the remote opening instruction. The driving device 132 controls the high-voltage switch K1 to be opened in response to the opening control instruction.

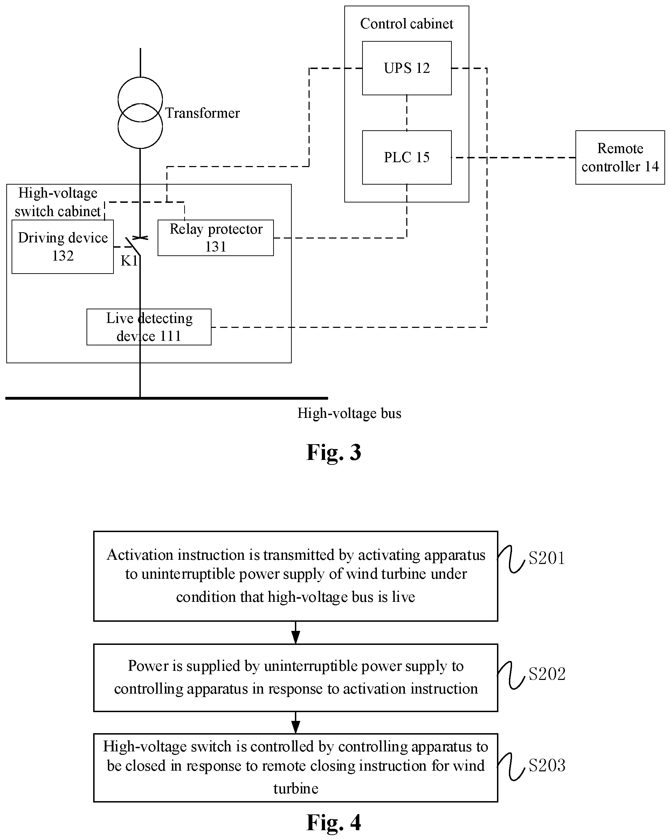

Fig. 3 is a schematic structural diagram of a system for controlling a high-voltage switch of a wind turbine according to yet another embodiment of the present disclosure. Fig. 3 differs from Fig. 1 in that the activating apparatus 11 may include the live detecting device 111 in Fig. 3. The system shown in Fig. 3 may further include a programmable logic controller (PLC) 15. The dashed lines connecting the various parts as shown in Fig. 3 indicate communication or electrical connections.

The features of the live detecting device 111 can be referred to the description of the above embodiments and will not be described in detail herein.

The programmable logic controller 15 may be in communication with the controlling apparatus 13. The programmable logic controller 15 may be configured to receive the remote closing instruction for the wind turbine and transmit the remote closing instruction to the controlling apparatus 13, so that the controlling apparatus 13 controls the high-voltage switch K1 to be closed according to the remote closing instruction under the condition that the uninterruptible power supply 12 is activated. After the uninterruptible power supply 12 is activated, it supplies power to the controlling apparatus 13. The remote closing instruction may in particular be issued by the remote controller 14 for the wind turbine. Correspondingly, the programmable logic controller 15 may be in communication with the remote controller 14.

In some examples, the programmable logic controller 15 may be in the control circuit of the high-voltage switch cabinet. For example, the programmable logic controller 15 may be arranged in the control cabinet for the wind turbine, which is not limited herein.

In addition to the remote closing instruction, the programmable logic controller 15 may further be configured to receive the remote opening instruction for the wind turbine and transmit the remote opening instruction to the controlling apparatus 13, so that the controlling apparatus 13 controls the high-voltage switch K1 to be opened according to the remote opening instruction. The remote opening instruction may be issued by the remote controller 14 to the programmable logic controller 15. That is, the remote controller 14 may further be configured to transmit the remote opening instruction to the programmable logic controller 15. The remote opening instruction does not need to be issued under the condition that the uninterruptible power supply 12 supplies power to the controlling apparatus 13.

In Fig. 3, the programmable logic controller 15 may be in the control cabinet for the wind turbine. The programmable logic controller 15 is in communication with the remote controller 14 in the central control room for the wind turbine, so that a ring main unit signal is not separately networked. The remote controller 14 may issue the opening and closing instructions to the controlling apparatus 13 in the high-voltage switch cabinet via the programmable logic controller 15.

The controlling apparatus 13 in Fig. 3 may include a relay protector 131 and a driving device 132 for the high-voltage switch. The features of the relay protector 131 and the driving device 132 may be related to the description of the above embodiments, and will not be described in detail herein.

In yet another embodiment of the present disclosure, the activating apparatus 11 may further include a remote activating device (not shown). The remote activating device may be arranged in a remote controller for the wind turbine, that is, in a central control room remote from the wind turbine.

The live detecting apparatus 111 may be configured to detect whether the high-voltage bus is live, and transmit live indication information if the high-voltage bus is detected to be live. Specifically, the live detecting device 111 transmits the live indication information to the remote activating device.

The remote activating device may be configured to transmit an activation instruction to the uninterruptible power supply 12 according to the live indication information.

In order to prevent the situation in which the uninterruptible power supply 12 has been activated to supply power to the controlling apparatus 13, but the remote controller 14 does not issue the remote closing instruction for a long time, which results in the power of the uninterruptible power supply 12 running out, the remote activating device arranged in the wind turbine remote controller determines that the remote controller 14 is about to issue the remote closing instruction before transmits the activation instruction to the uninterruptible power supply 12. Alternatively, the remote activating device receives the live indication information, and the remote controller 14 acquires the live indication information and issues the remote closing instruction. By transmitting the activation instruction through the remote activating device arranged in the remote controller for the wind turbine, unnecessary consumption of the uninterruptible power supply 12 can be avoided, which further ensures the reliability of remote closing.

In the various embodiments described above, the uninterruptible power supply 12 may further be configured to: monitor a remaining power of the uninterruptible power supply 12 under the condition that the wind turbine is stopped; continue supplying power to at least some electric components of the wind turbine when the remaining power of the uninterruptible power supply 12 is higher than a reserve power; stop supplying power to the at least some electric components of the wind turbine when the remaining power of the uninterruptible power supply 12 decreases to the reserve power.

The uninterruptible power supply 12 may supply power to some of the electric components in the wind turbine in a condition of the wind turbine that is stopped. In order to ensure that the power in the uninterruptible power supply 12 is sufficient to support the controlling apparatus 13, the remaining power of the uninterruptible power supply can be monitored in real time. When the remaining power of the uninterruptible power supply 12 is higher than a reserve power, the power supply to at least some electric components of the wind turbine may be continued. When the remaining power of the uninterruptible power supply 12 decreases to the reserve power, the power supply to the electric components of the wind turbine is stopped, so as to reserve a certain power supply capacity for the next closing operation.

The reserve power can be specifically set according to a working scenario or a working demand, which is not limited herein. For example, the power supply capacity reserved by the uninterruptible power supply 12 may be used for the normal operation of some electric components of the wind turbine (including the controlling apparatus 13) for 15 minutes. In some examples, the reserve power is an amount of power for supporting the controlling apparatus 13 to control the high-voltage switch K1 to be closed at least once.

Fig. 4 is a flowchart of a method for controlling a high-voltage switch of a wind turbine according to an embodiment of the present disclosure. The method may be applied to the system according to the above embodiments. As shown in Fig. 4, the method may include steps S201 to S203.

At step S201, an activation instruction is transmitted by the activating apparatus 11 to the uninterruptible power supply 12 of the wind turbine under the condition that the high-voltage bus is live.

In some examples, the activating apparatus 11 may include the live detecting device 111. Accordingly, step S201 may specifically include: detecting, by the live detecting device 111, whether the high-voltage bus is live, and transmits the activation instruction to the uninterruptible power supply 12 when the high-voltage bus is detected to be live.

In some examples, the activating apparatus 11 includes a live detecting device 111 and a remote activating apparatus arranged in the remote controller 14 for the wind turbine. Accordingly, step S201 may be specifically includes: detecting, by the live detecting device, whether the high-voltage bus is live, and transmits the live indication information when the high-voltage bus is detected to be live; transmitting, by the remote activating device, the activation instruction to the uninterruptible power supply based on the live indication information.

At step S202, power is supplied by the uninterruptible power supply 12 to the controlling apparatus 13 in response to the activation instruction.

At step S203, the high-voltage switch is controlled by the controlling apparatus 13 to be closed in response to the remote closing instruction for the wind turbine.

In this embodiment of the present disclosure, the activating apparatus 11 in the system transmits the activation instruction to the uninterruptible power supply 12 when the high-voltage bus is determined to be live. The uninterruptible power supply 12 supplies power to the controlling apparatus 13 in response to the activation instruction, so that the controlling apparatus 13 can control the high-voltage switch to be closed after receiving the remote closing instruction for the wind turbine. Even if the wind turbine is arranged in a place inconvenient for a worker to reach, the remote closing can be realized by using this embodiment of the present disclosure, without requiring the worker to come to the location of the wind turbine for manually closing the high-voltage switch, which improves the timeliness of the closing, avoids the additional consumption of manpower and transportation and reduces costs.

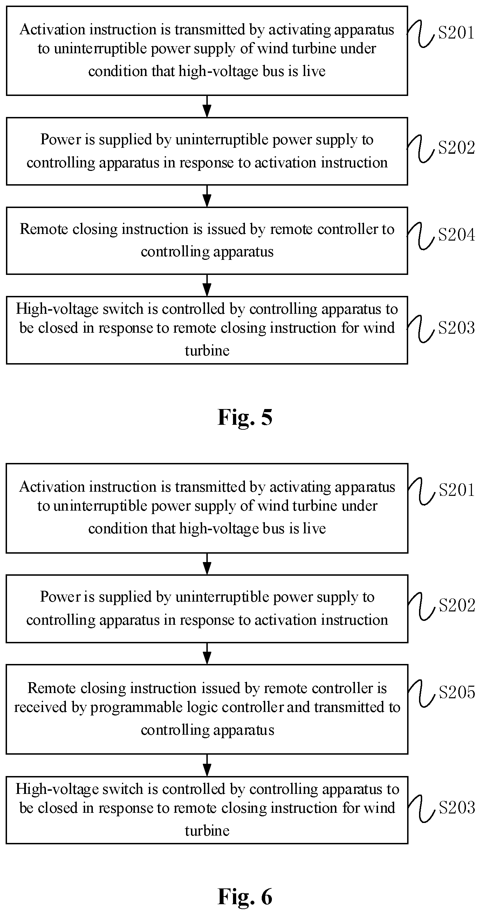

Fig. 5 is a flowchart of a method for controlling a high-voltage switch of a wind turbine according to another embodiment of the present disclosure. The system for controlling the high-voltage switch of the wind turbine to which the method shown in Fig. 5 is applicable to may further include a remote controller 14 of the wind turbine in communication with the controlling apparatus 13. Fig. 5 differs from Fig. 4 in that the method shown in Fig. 5 may further include step S204.

At step S204, a remote closing instruction is issued by the remote controller 14 to the controlling apparatus 13.

The method may further include a control flow of remote opening. Specifically, the remote controller 14 issues a remote opening instruction to the controlling apparatus 13, so that the controlling apparatus 13 controls the high-voltage switch to be opened according to the remote opening instruction.

Reference of the relevant features of the above steps may be made to the relevant description of the above system, which will not be repeated here.

Fig. 6 is a flowchart of a method for controlling a high-voltage switch of a wind turbine according to yet another embodiment of the present disclosure. The system to which the control method shown in Fig. 6 is applicable may further include a programmable logic controller 15 in the control circuit of the high-voltage switch cabinet. The programmable logic controller 15 is in communication with the controlling apparatus 13 and the remote controller 14 for the wind turbine. The activating apparatus 11 and the controlling apparatus 13 are arranged in a main circuit of a high-voltage switch cabinet of the wind turbine, and the uninterruptible power supply 12 is arranged in a control circuit of the high-voltage switch cabinet. Fig. 6 differs from Fig. 4 in that the method shown in Fig. 6 may further include step S205.

At step S205, the remote closing instruction issued by the remote controller 14 is received by the programmable logic controller 15 and transmitted to the controlling apparatus 13.

It should be noted that the method may further include a control flow of remote opening. The remote controller 14 issues a remote opening instruction to the programmable logic controller 15. The programmable logic controller 15 transmits the received remote opening instruction to the controlling apparatus 13, so that the controlling apparatus 13 controls the high-voltage switch to be opened according to the remote opening instruction.

Reference of the relevant features of the above steps may be made to the relevant description of the above system, which will not be repeated here.

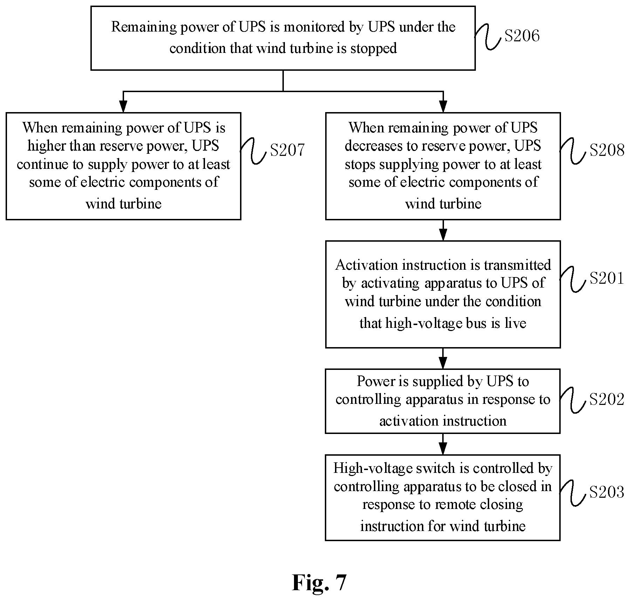

Fig. 7 is a flowchart of a method for controlling a high-voltage switch of a wind turbine according to yet another embodiment of the present disclosure. Fig. 7 differs from Fig. 4 in that the method shown in Fig. 7 may further include steps S206 to S208.

At step S206, the remaining power of the uninterruptible power supply 12 is monitored by the uninterruptible power supply 12 under the condition that the wind turbine is stopped.

At step S207, when the remaining power of the uninterruptible power supply 12 is higher than the reserve power, the uninterruptible power supply continues to supply power to at least some of the electric components of the wind turbine.

At step S208, when the remaining power of the uninterruptible power supply 12 decreases to the reserve power, the uninterruptible power supply 12 stops supplying power to at least some of the electric components of the wind turbine.

In some examples, the amount of reserve power is an amount of power used to enable the controlling apparatus 13 to control the high-voltage switch to be closed at least once.

Reference of the relevant features of the above steps may be made to the relevant description of the above system, which will not be repeated here.

In some examples, the controlling apparatus 13 in the above embodiment may include a relay protector 131 and a driving device 132 for the high-voltage switch, and the steps of the controlling, by the controlling apparatus 13, the closing of the high-voltage switch in response to the remote closing instruction for the wind turbine in the above embodiment may be specifically include: transmitting, by the relay protector 131, a closing control instruction to the driving device 132 in response to the remote closing instruction under the condition that the uninterruptible power supply 12 supplies power to the relay protector 131; controlling, by the driving device 132, the high-voltage switch to be closed in response to the closing control instruction under the condition that it is powered by the uninterruptible power supply 12.

Accordingly, the flow of the controlling apparatus 13 for opening may specifically include: transmitting, by the relay protector 131, an opening control instruction to the driving device 132 in response to the remote opening instruction; controlling, by the driving device 132, the high-voltage switch to be opened in response to the opening control instruction.

It should be clear that the embodiments in the specification are described in a progressive way, and the same or similar parts of each embodiment can be referred to each other. Each embodiment focuses on the differences with other embodiments. Regarding method embodiments, reference is made to the description of system embodiments. The disclosure is not limited to the specific steps and structures described above and shown in the figures. Those skilled in the art can make various changes, modifications and additions, or change the order between steps after understanding the gist of the disclosure. And, for the sake of brevity, a detailed description of the known method and technology is omitted here.

Those skilled in the art should understand that the above-mentioned embodiments are all illustrative and not restrictive. Different technical features appearing in different embodiments can be combined to achieve beneficial effects. Those skilled in the art should be able to understand and implement other modified embodiments of the disclosed embodiments on the basis of studying the drawings, the description, and the claims. In the claims, the term "including" does not exclude other devices or steps, the indefinite article "a" does not exclude a plurality; the terms "first" and "second" are used to indicate names and not to indicate any particular order. Any reference signs in the claims should not be construed as limiting the protection scope. The functions of several parts appearing in the claims can be realized by a single hardware or software module. The presence of certain technical features in different dependent claims does not mean that these technical features cannot be combined to obtain beneficial effects.

## Claims

1. A system for controlling a high-voltage switch of a wind turbine, wherein one end of the high-voltage switch is connected to a transformer of the wind turbine, and the other end of the high-voltage switch is connected to a high-voltage bus, and the system comprises:
an activating apparatus for an uninterruptible power supply, configured to transmit, under a condition that the high-voltage bus is live, an activation instruction to the uninterruptible power supply of the wind turbine;
the uninterruptible power supply, configured to supply power to a controlling apparatus for the high-voltage switch in response to the activation instruction;
the controlling apparatus, configured to control, in response to a remote closing instruction for the wind turbine, the high-voltage switch to be closed.

2. The system according to claim 1, further comprising:
a remote controller for the wind turbine in communication with the controlling apparatus and configured to issue the remote closing instruction.

3. The system according to claim 1, wherein
the activating apparatus and the controlling apparatus are arranged in a main circuit of a high-voltage switch cabinet of the wind turbine, and the uninterruptible power supply is arranged in a control circuit of the high-voltage switch cabinet.

4. The system according to claim 3, wherein the control circuit of the high-voltage switch cabinet further comprises a programmable logic controller configured to receive the remote closing instruction from the wind turbine and transmit the remote closing instruction to the controlling apparatus, so that under a condition that the uninterruptible power supply is activated, the controlling apparatus controls the high-voltage switch to be closed according to the remote closing instruction.

5. The system according to any one of claims 1 to 4, wherein the activating apparatus comprises:
a live detecting device configured to detect whether the high-voltage bus is live, and transmit the activation instruction to the uninterruptible power supply when the high-voltage bus is detected to be live.

6. The system according to any one of claims 2 to 4, wherein the activating apparatus comprises a live detecting device and a remote activating device;
wherein the live detecting device is configured to detect whether the high voltage bus is live, and transmit live indication information when the high-voltage bus is detected to be live;
the remote activating device is arranged in a remote controller for the wind turbine, and is configured to transmit the activation instruction to the uninterruptible power supply according to the live indication information.

7. The system according to claim 1, wherein the controlling apparatus comprises a relay protector and a driving device for the high-voltage switch;
under a condition that the uninterruptible power supply supplies power to the relay protector, the relay protector is configured to transmit a closing control instruction to the driving device in response to the remote closing instruction; or, transmit an opening control instruction to the driving device in response to a remote opening instruction;
under a condition that the uninterruptible power supply supplies power to the driving device, the driving device is configured to control the high-voltage switch to be closed in response to the closing control instruction; or, control the high-voltage switch to be opened in response to the opening control instruction.

8. The system according to claim 1, wherein the uninterruptible power supply is further configured to:
monitor a remaining power of the uninterruptible power supply under a condition that the wind turbine is stopped;
continue supplying power to at least one or more electric components of the wind turbine when the remaining power of the uninterruptible power supply is higher than a reserve power;
stop supplying power to at least one or more electric components of the wind turbine when the remaining power of the uninterruptible power supply decreases to the reserve power;
wherein the reserve power is an amount of power required by the controlling apparatus to control the high-voltage switch to be closed at least once.

9. The system according to claim 4, wherein the remote controller is further configured to issue a remote opening instruction to the controlling apparatus, so that the controlling apparatus controls the high-voltage switch to be opened according to the remote opening instruction;
or, the remote controller is further configured to transmit a remote opening instruction to the programmable logic controller; the programmable logic controller is configured to transmit the received remote opening instruction to the controlling apparatus, so that the controlling apparatus controls the high-voltage switch to be opened according to the remote opening instruction.

10. A method for controlling a high-voltage switch of a wind turbine, applicable to the system according to any one of claims 1 to 9 and comprising:
transmitting, by the activating apparatus under a condition that the high-voltage bus is live, the activation instruction to the uninterruptible power supply of the wind turbine;
supplying, by the uninterruptible power supply, power to the controlling apparatus for the high-voltage switch in response to the activation instruction;
controlling, by the controlling apparatus in response to the remote closing instruction for the wind turbine, the high-voltage switch to be closed.

11. The method according to claim 10, wherein the system further comprises a remote controller for the wind turbine in communication with the controlling apparatus,
the method further comprises:
issuing, by the remote controller, the remote closing instruction to the controlling apparatus.

12. The method according to claim 10, wherein the activating apparatus and the controlling apparatus are arranged in a main circuit of a high-voltage switch cabinet of the wind turbine, and the uninterruptible power supply is arranged in a control circuit of the high-voltage switch cabinet; the control circuit of the high-voltage switch cabinet further comprises a programmable logic controller;
the method further comprises:
receiving, by the programmable logic controller, the remote closing instruction issued by the remote controller, and transmitting the remote closing instruction to the controlling apparatus.

13. The method according to any one of claims 10 to 12, wherein the activating apparatus comprises a live detecting apparatus;
the transmitting, by the activating apparatus under the condition that the high-voltage bus is live, the activation instruction to the uninterruptible power supply of the wind turbine comprises:
detecting, by the live detecting device, whether the high-voltage bus is live, and transmitting the activation instruction to the uninterruptible power supply when the high-voltage bus is detected to be live.

14. The method according to claim 11 or 12, wherein the activating apparatus comprises a live detecting device and a remote activating device arranged in a remote controller of the wind turbine;
the transmitting, by the activating apparatus under the condition that the high-voltage bus is live, the activation instruction to the uninterruptible power supply of the wind turbine comprises:
detecting, by the live detecting device, whether the high-voltage bus is live, and transmitting live indication information when the high-voltage bus is detected to be live; and
transmitting, by the remote activating device, the activation instruction to the uninterruptible power supply according to the live indication information.

15. The method according to claim 10, wherein the method further comprises:
monitoring, by the uninterruptible power supply, a remaining power of the uninterruptible power supply under a condition that the wind turbine is stopped;
continuing, by the uninterruptible power supply, supplying power to at least one or more electric components of the wind turbine when the remaining power of the uninterruptible power supply is higher than a reserve power;
stopping, by the uninterruptible power supply, supplying power to at least one or more electric components of the wind turbine when the remaining power of the uninterruptible power supply decreases to the reserve power;
wherein the reserve power is an amount of power required by the controlling apparatus to control the high-voltage switch to be closed at least once.

16. The method according to claim 12, wherein the method further comprises:
issuing, by the remote controller, a remote opening instruction to the controlling apparatus, so that the controlling apparatus controls the high-voltage switch to be opened according to the remote opening instruction;
or,
issuing, by the remote controller, a remote opening instruction to the programmable logic controller; transmitting, by the programmable logic controller, the received remote opening instruction to the controlling apparatus, so that the controlling apparatus controls the high-voltage switch to be opened according to the remote opening instruction.
